(19) Europäisches Patentamt
European Patent Office
Office européen des brevets

(11) EP 0 702 484 B1

(12) **EUROPEAN PATENT SPECIFICATION**

(45) Date of publication and mention
of the grant of the patent:
**24.11.1999 Bulletin 1999/47**

(51) Int Cl.⁶: **H04N 3/15**

(21) Application number: **95306509.1**

(22) Date of filing: **15.09.1995**

(54) **Photoelectric converting apparatus**

Fotoelektrisches Umwandlungsgerät

Appareil de conversion photo-électrique

(84) Designated Contracting States:
**DE FR GB IT NL**

(30) Priority: **16.09.1994 JP 22204494**

(43) Date of publication of application:
**20.03.1996 Bulletin 1996/12**

(73) Proprietor: **CANON KABUSHIKI KAISHA Tokyo (JP)**

(72) Inventors:
• **Ueno, Isamu**
  **Ohta-ku, Tokyo (JP)**
• **Miyawaki, Mamoru**
  **Ohta-ku, Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
EP-A- 0 414 466          GB-A- 2 131 545
US-A- 4 583 002          US-A- 4 959 723

• PATENT ABSTRACTS OF JAPAN vol. 15 no. 246
(E-1081) ,24 June 1991 & JP-A-03 077485
(MATSUSHITA ELECTRON CORP) 3 April 1991,

## Description

### BACKGROUND OF THE INVENTION

#### Field of the Invention

The invention relates to a photoelectric converting apparatus which is used as an image sensor for converting an optical image to an electric signal in a video camera, an image input apparatus, or the like and also relates to a detecting method of detecting a target object by using such a photoelectric converting apparatus.

#### Related Background Art

Hitherto, in case of constructing an image pickup system for optically detecting a target object and obtaining an electric image signal, a light source for illuminating the target object and a photoelectric converting apparatus for detecting reflected light from the target object are provided.

Since the conventional image pickup system has been constructed as mentioned above, there are following problems.

(1) In order to illuminate the target object, since it is necessary to continuously turn on the light source, the electric power consumption increases, so that such a system is unsuitable for a portable apparatus which uses a battery as a power source.

(2) Since the detection is performed by judging only the presence or absence of the reflected light from the target object, it is difficult to judge whether the target object has correctly been detected or not. That is, an erroneous detection or the like easily occurs, so that it is difficult to detect at a high precision.

US-A-4583002 discloses a solid-state imaging sensor in which the sensitivity of the sensor is automatically adjusted in accordance with the overall intensity of the image being sensed. The gain (or sensitivity) of each pixel depends on the level of a charging potential. A light-sensitive voltage multiplier circuit receives a fixed voltage which charges an input node for a bucket-brigade circuit. As the charge is transferred along the bucket-brigade circuit to an output node, charge is lost through photodiodes, so that the amount of charge (and hence the voltage) reaching the output of the bucket-brigade device depends on the intensity of light shining on the photodiodes. The voltage at the output of the bucket-brigade device is used to control the sensitivity of the pixels. This arrangement is intended to provide an imaging sensor in which pixel saturation is prevented over a wide range of light amplitudes without having to provide a mechanical shutter.

EP-A-0414466 discloses an arrangement for reading retroreflective articles such as vehicle licence plates. A low intensity illumination source (e.g. a 300 watt xenon source) periodically illuminates a field of view. A detector is used to detect light emitted by the low intensity source and reflected back to the apparatus, thereby to detect the presence of a retroreflective article. In response to detection by the detector, a high intensity illumination source (e.g. a 1200 watt flash lamp) is operated to illuminate the detected article more powerfully. An analyser (e.g. a CCD type video camera) is used to analyse the image of the article obtained with the higher illumination intensity. The output of the analyser can be used to identify a vehicle passing the apparatus. The low intensity light source is used to detect articles, and the high intensity light source is only used once an article has been detected, in order to save power consumption while still providing high intensity illumination for operation of the analyser. It is proposed, as an optional feature, that the analyser could additionally be used to perform the function of the detector, instead of providing a separate detector.

US-A-4959723 discloses a solid state image pick up apparatus in which pixels are arranged in rows and columns, on horizontal signal lines and vertical signal lines. Reading operations are executed for each row by the horizontal signal lines. The optical information accumulated in the pixels is transferred to horizontal scanning sections through the vertical signal lines. There are two horizontal scanning sections, and each vertical signal line is connected to both horizontal scanning sections. During read-out, signals read from one row of pixels are transferred to one horizontal scanning section and signals read from the next row of pixels are transferred to the other horizontal scanning section.

#### Summary of the Invention

According to the present invention there is provided a photodetection method as set out in claim 1, photodetection apparatus as set out in claim 5, and photodetection apparatus as set out in claim 9. The remaining claims set out optional features.

An embodiment of the invention provides a photoelectric converting apparatus which can reduce electric power consumption and can detect at a high precision, and also provides a method of detecting a target object by using such a photoelectric converting apparatus.

By providing the first circuit unit which operates at a low power source voltage and the second circuit unit which operates at a high power source voltage, the apparatus can efficiently be made operative and the electric power consumption can be reduced.

In an embodiment, by making the first circuit unit operative at a low power source voltage, only the reflected light from the target object is detected. By making the second circuit unit operative at a high power source voltage on the basis of such a detection, an image of the target object can be detected in detail.

Embodiments of the present invention are described with reference to the accompanying drawings.

Brief Description of the Drawings

Fig. 1 is a circuit diagram showing the first embodiment of the invention;

Fig. 2 is a timing chart showing the operation of the first embodiment;

Fig. 3 is a circuit diagram showing an embodiment of a power source voltage detecting circuit;

Fig. 4 is a circuit diagram showing the second embodiment of the invention;

Fig. 5 is a circuit diagram showing the third embodiment of the invention;

Fig. 6 is a timing chart showing the operation of the third embodiment;

Fig. 7 is a graph for explaining photoelectric converting characteristics;

Fig. 8 is a graph for explaining photoelectric converting characteristics;

Fig. 9 is a circuit diagram showing the fourth embodiment of the invention;

Fig. 10 is a timing chart showing the operation of the fourth embodiment; and

Fig. 11 is a circuit diagram showing the fifth embodiment of the invention.

DETAILED DESCRIPTION OF THE PREFERRED EMBODIMENTS

According to an embodiment of the invention, a two-dimensional photoelectric converting apparatus having a plurality of photoelectric converting devices corresponding to a plurality of pixels is used. The photoelectric converting apparatus is first made operative in a first mode in which a power source voltage is set to a low voltage, thereby detecting only the presence or absence of reflected light from a target object. When the reflected light is detected, the apparatus is made operative in a second mode in which the power source voltage is set to a higher voltage and pixel information from each of the photoelectric converting devices is processed in detail.

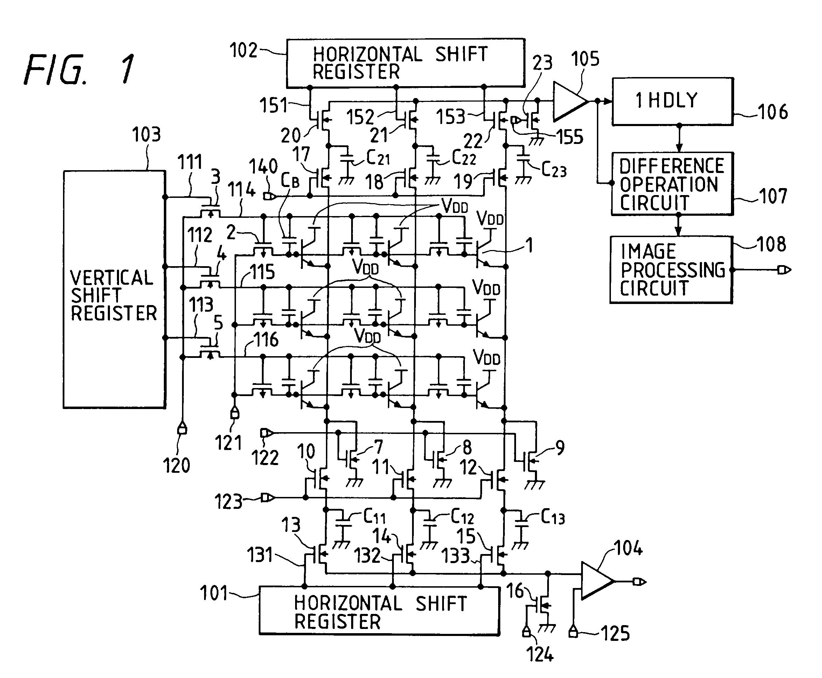

Fig. 1 shows the first embodiment.

In Fig. 1, according to the embodiment, a bipolar type NPN phototransistor 1 is used as a photoelectric converting device. The transistor 1 is used in nine pixels arranged as three pixels in each of the row and column directions. A power source voltage $V_{DD}$ is applied to the collector of each transistor 1.

One end of a capacitor $C_B$ and one end of a PMOS transistor 2 are connected to the base of each transistor 1. The transistors 2 are connected in series in each row. One end of each series circuit is connected to a terminal 121. The other end of the capacitor $C_B$ and a gate of the transistor 2 are connected to respective driving lines 114, 115, and 116 for each respective row. The driving lines 114, 115, and 116 are connected to a terminal 120 through NMOS transistors 3, 4, and 5. Gates of the transistors 3, 4, and 5 are connected to a vertical shift resister 103 through driving lines 111, 112, and 113.

Emitters of the transistors 1 are connected in common for each column and their connection point is connected to ground through NMOS transistors 7, 8, and 9 and are also connected to one input terminal of a comparator 104 through NMOS transistors (10 and 13), (11 and 14), and (12 and 15), respectively. Gates of the transistors 7, 8, and 9 are connected to a terminal 122. Gates of the transistors 10, 11, and 12 are connected to a terminal 123.

The transistors 13, 14, and 15 are connected to a horizontal shift resister 101 for the first mode via driving lines 131, 132, and 133. The aforementioned input terminal of the comparator 104 is connected to ground through an NMOS transistor 16. A gate of the transistor 16 is connected to a terminal 124. A reference voltage is applied to the other input terminal of the comparator 104 from a terminal 125. Storage capacitors $C_{11}$, $C_{12}$, and $C_{13}$ are connected to points between the transistors (10 and 13), (11 and 14), and (12 and 15), respectively.

The connection point at which the emitters of the transistors 1 are connected in common is also connected to a buffer amplifier 105 through NMOS transistors (17 and 20), (18 and 21), and (19 and 22), respectively. Gates of the transistors 17, 18, and 19 are connected to a terminal 140. Gates of the transistors 20, 21, and 22 are connected to a horizontal shift register 102 for the second mode via driving lines 151, 152, and 153. The input terminal of the buffer amplifier 105 is connected to ground through an NMOS transistor 23. A gate of the transistor 23 is connected to a terminal 155.

An output of the buffer amplifier 105 is supplied to a 1H delay circuit 106. The above output and a 1H delay output are supplied to a difference operation circuit 107. Its difference output is supplied to an image processing circuit 108.

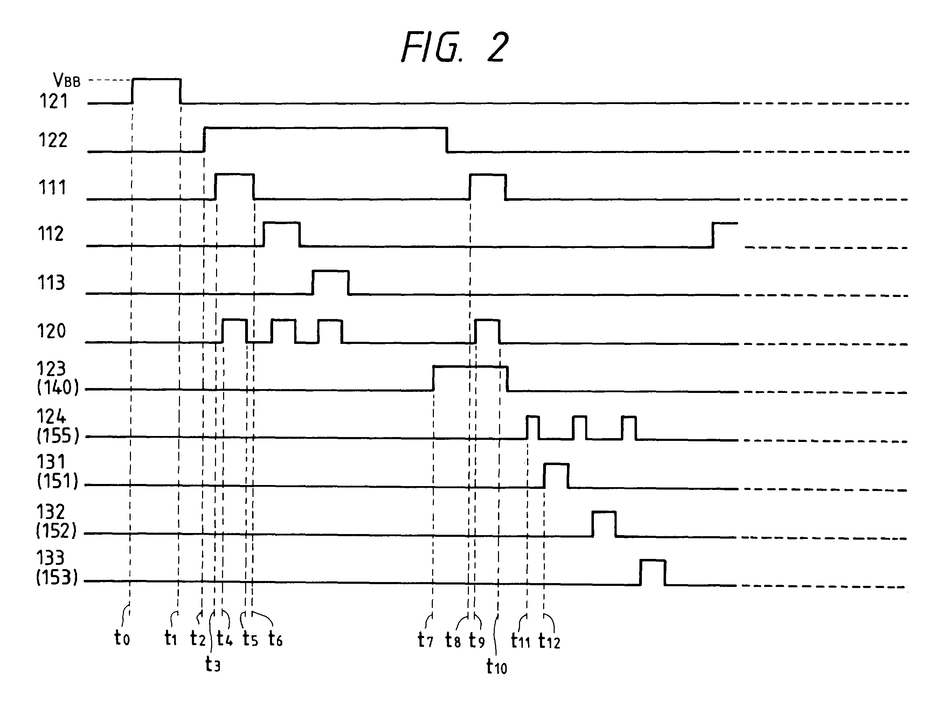

The operation in the above construction will now be described hereinbelow with reference to Fig. 2.

First, a first mode is set such that the power source voltage of the circuit is set to a first power voltage lower than a second power voltage. For a period of time from $t_0$ to $t_1$, a pulse voltage $V_{BB}$ is applied to the terminal 121. In this instance, by setting the driving lines 114, 115, and 116 to ground level and by setting the voltage $V_{BB}$ to a value which is equal to or larger than a threshold voltage $V_{th}$ of the transistor 2, all of the transistors 2 are turned on. In this state, therefore, the base potential of each of the transistors 1 is reset to the voltage $V_{BB}$ and is held in the capacitor $C_B$ (clamping reset).

When the voltage $V_{BB}$ drops, a pulse of the H level is subsequently sent to the terminal 122 from time

$t_2$, thereby turning on the transistors 7, 8, and 9. Thus, the emitters of the transistors 1 are connected to ground. The vertical shift resister 103 is subsequently made operative, thereby sequentially supplying pulses to the driving lines 111, 112, and 113. For a period of time during each pulse, a pulse is supplied to the terminal 120.

When the pulse is supplied to the driving line 111 for a period of time from $t_3$ to $t_6$, the transistor 3 is turned on. When the pulse is supplied to the terminal 120 at time $t_4$, a voltage appears in the driving line 114. Such a voltage raises a base potential of the transistor 1 through the capacitor $C_B$. In this instance, the voltage between the base and emitter of each of the three transistors 1 in pixels of the first row enters a forward bias state. Each of the transistors 1 performs an emitter follower operation. Consequently, the base potential is decreased to a value close to ground level by recombination of holes (transient reset).

In contrast, when the pulse of the terminal 120 ends at time $t_5$, the base potential is lowered and the voltage between the base and emitter completely enters a reverse bias state, so that an accumulating operation by photoelectric conversion is started.

Such a transient resetting operation is executed for each of the transistors 1 corresponding to the pixels of each row. After the lapse of a predetermined accumulating time, a pulse of the H level is supplied to the terminal 123 at time $t_7$ and the transistors 10, 11, and 12 are turned on, thereby resetting the storage capacitors $C_{11}$ to $C_{13}$ to ground level. Then the pulse on terminal 122 ends, turning off the transistors 7, 8 and 9.

Subsequently, the vertical shift resister 103 is again made operative. A pulse is supplied to the driving line 111 at time $t_8$ and a pulse is further sent to the terminal 120 at time $t_9$, thereby turning on the transistor 3. Consequently, the driving line 114 is set to the H level and the base potential of each of the transistors 1 of the first row rises through the capacitor $C_B$. Thus, the transistors 1 are made operative and the respective signals of the pixels are read out, and are temporarily stored in the capacitors $C_{11}$ to $C_{13}$.

A pulse is supplied to the terminal 124 at time $t_{11}$ and the transistor 16 is turned on, thereby resetting the input terminal of the comparator 104. After that, pulses are sequentially supplied to the driving lines 131, 132, and 133 by the horizontal shift register 101 from time $t_{12}$ and the transistors 13, 14, and 15 are sequentially turned on, thereby sequentially reading out the signal voltages of the capacitors $C_{11}$ to $C_{13}$. During this period of time, pulses are supplied to the terminal 124, thereby resetting the input terminal of the comparator 104 between the readings out.

The signal voltages sequentially read out from the capacitors $C_{11}$ to $C_{13}$ are compared by the comparator 104 with the reference voltage which is supplied from the terminal 125 . When at least one of the signal voltages exceeds the reference voltage, the output of the comparator 104 is set to the H level. In this case, it is assumed that there is reflected light from the target object.

In the case where the presence of reflected light is detected by the comparator 104 as mentioned above, the second mode is set such that the power source voltage of the circuit is raised and set to the second power voltage.

In the second mode, the foregoing photoelectric converting operation is executed again. In this case, however, as shown in parentheses in Fig. 2, the pulses for performing operations are supplied to the terminals 140 and 155 (instead of 123 and 124) and the driving lines 151, 152, and 153 (instead of 131, 132 and 133). Consequently, the signal voltages are stored into storage capacitors $C_{21}$ to $C_{23}$. The horizontal shift register 102 is used (instead of 101).

The signal voltages read out from the capacitors $C_{21}$ to $C_{23}$ are input to the 1H delay circuit 106 via the buffer amplifier 105 and are also input to the difference operation circuit 107. Edge information in the vertical direction is obtained as its differential output. On the basis of the edge information, various kinds of image processes can be executed by the image processing circuit 108.

According to the embodiment, therefore, it is possible to provide a low cost adaptive photoelectric converting apparatus, constructed in a manner such that common photoelectric converting devices are used in the first mode of low electric power consumption and the second mode of normal electric power consumption. In the first mode the presence or absence of reflected light is always monitored, and when there is reflected light, the mode is switched to the second mode, thereby executing the advanced processes.

Incidentally, according to an experiment, a proper result was confirmed in a condition where the first power source voltage is 3.3 volt and the second power source voltage is 5.0 volt.

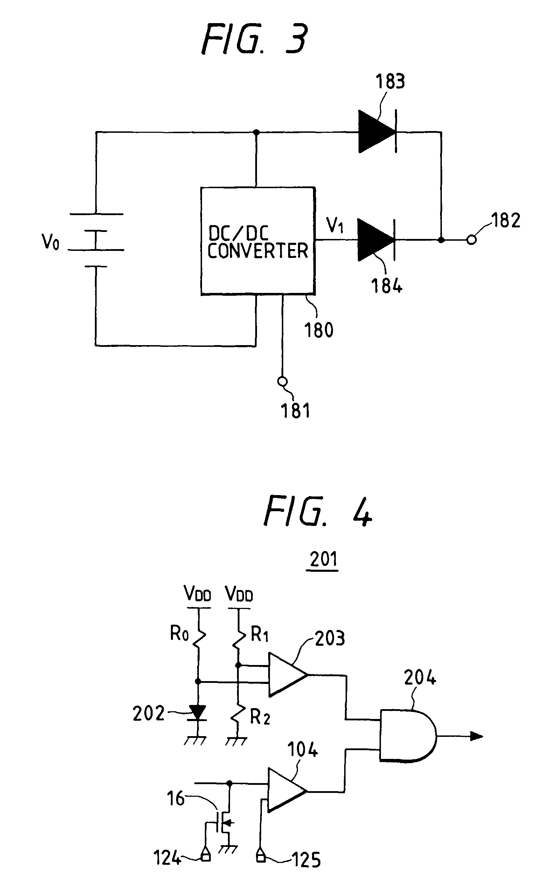

Fig. 3 shows an embodiment of a power source voltage switching circuit.

In Fig. 3, a power source voltage $V_0$ of a low voltage is raised by a DC/DC converter 180. Output voltages $V_1$ and $V_0$ are wired-connected to an output terminal 182 through diodes 183 and 184. Further, the operation/non-operation of the DC/DC converter 108 is controlled by a control signal from a control input terminal 181 of the DC/DC converter 180, thereby enabling the output voltage at the output terminal 182 to be changed.

By the above construction, the apparatus ordinarily operates in the first mode and the electric power consumption is suppressed to a low value. In the case where reflected light from the target object is detected, the mode is switched to the second mode, so that the image of the target object can be more clearly and more certainly detected.

Fig. 4 shows the second embodiment of the invention.

In the embodiment, a power source voltage detecting circuit 201 is provided. The circuit 201 comprises resisters $R_0$, $R_1$, and $R_2$, a diode 202, a comparator 203, and an AND gate 204 and is constructed so that an output of the comparator 104 of Figure 1 is supplied to the AND gate 204. The other portions (not shown) in Fig. 4 are constructed in a manner similar to those in Fig. 1.

The embodiment relates to an improvement at the time of, particularly, the operation at a low voltage. When it is assumed that the lowest power source voltage at which the operation of the whole circuit in Fig. 1 can be assured is set to $V_0$ and a voltage in the forward direction of the diode 202 is set to $V_F$, $R_1$ and $R_2$ are set so as to satisfy the following equation.

$$R_2/(R_1 + R_2) \bullet V_0 = V_F$$

Consequently, for example, in the case where the power source voltage $V_{DD}$ is shared with a different circuit in the system or the like, and when the voltage drops momentarily under $V_0$, the output of the comparator 203 is inverted. Therefore, when the presence or absence of reflected light is judged by the output of the comparator 104, by obtaining the AND of the outputs of the comparators 203 and 104 by the AND gate 204, an erroneous detection can be prevented.

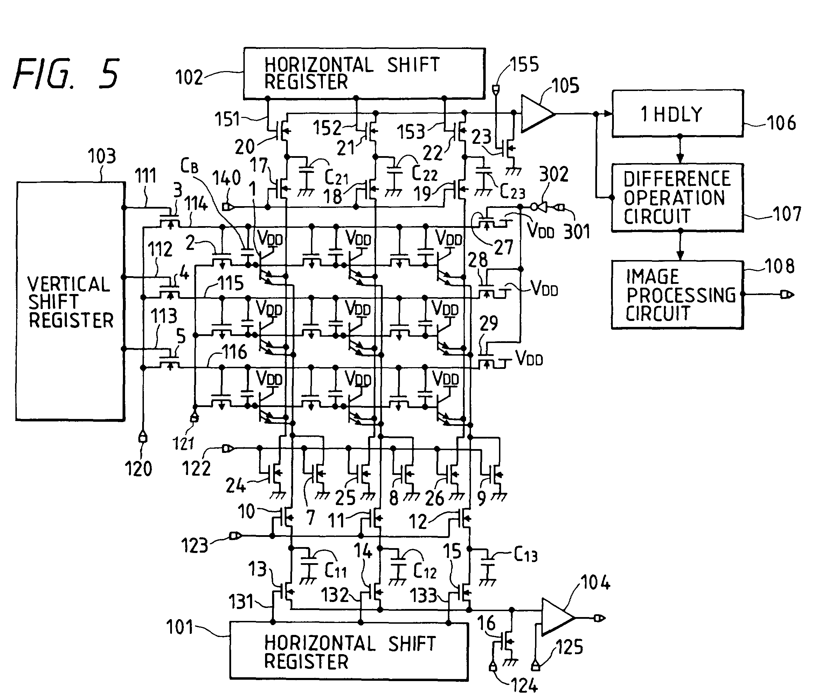

Fig. 5 shows the third embodiment. Portions corresponding to those in Fig. 1 are designated by the same reference numerals. The embodiment is made by improving the first and second embodiments. It is an object of the embodiment to perform the judgment at a higher speed with respect to the presence or absence of reflected light upon operating at a low voltage.

For this purpose, a transistor having a double emitter structure is used as the transistor 1 of each pixel in the embodiment. The emitters of the transistors 1 are commonly connected for each column, respectively. The connection point of one of the emitters is connected to the reading system for the first mode in which the capacitors $C_{11}$ to $C_{13}$ are used. The connection point of the other of the emitters is connected to the reading system for the second mode in which the capacitors $C_{21}$ to $C_{23}$ are used.

Transistors 24, 25, and 26 are connected to the emitter connection points of the reading system of the second mode. Transistors 27, 28, and 29 are connected to the driving lines 114, 115, and 116. Pulses are sent from a terminal 301 to their gates through an inverter 302.

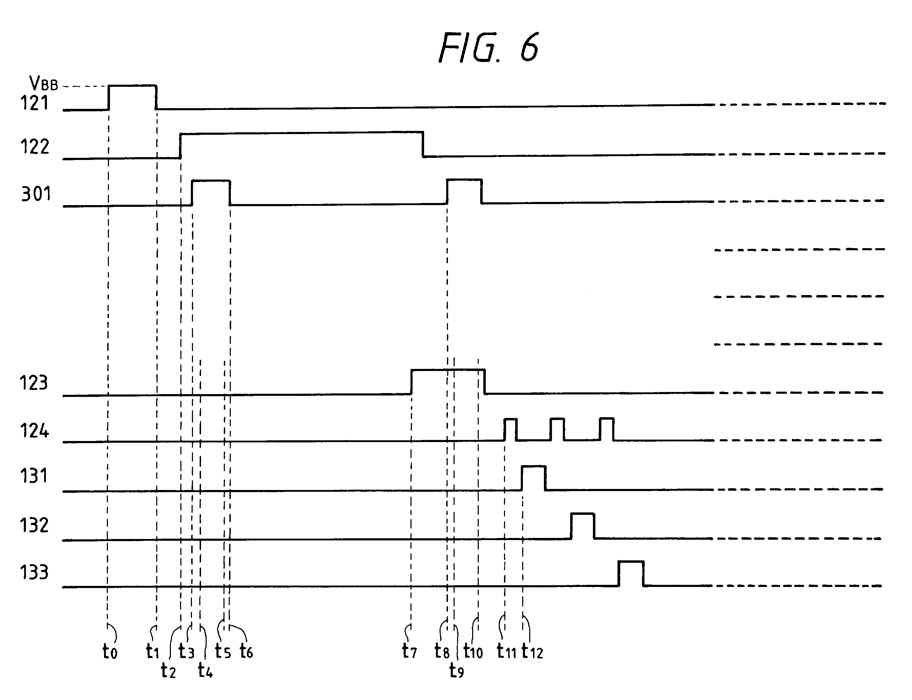

The operation will now be described hereinbelow with reference to Fig. 6.

At time $t_0$ to $t_1$, the voltage $V_{BB}$ is applied to the terminal 121, thereby performing the clamping reset. Subsequently, a pulse to the terminal 122 is supplied from time $t_2$, while the vertical shift resister 103 is made non-operative, and a pulse is supplied to the terminal 301 at time $t_3$. Consequently, the transistors 27 to 29 are turned on so that lines 114 to 116 are supplied with $V_{DD}$

and the transient reset is performed to the transistors 1 of all pixels at the same time.

The third embodiment differs from the first embodiment with respect to a point that a pulse is first supplied to the terminal 123 at time $t_7$ and then a pulse is also supplied to the terminal 301 at time $t_8$, thereby all the information stored in all the pixels is read out. By the above operation, peak signals of the first to third columns are read out to the capacitors $C_{11}$ to $C_{13}$, respectively.

Thus, the amount of data at the time of the first mode operation is reduced to 1/3. Since the number of pixels is greater in the actual photoelectric converting apparatus, the reduction in the amount of data is consequently greater. Therefore, the judgment about the presence or absence of reflected light can be performed at an extremely high speed.

It is sufficient that the operation in the second mode when there is reflected light is the same as that in the first embodiment. Although the peak of each column unit has been used as a peak output in the embodiment, by changing the connection lines, a peak output of a row unit or a peak output of a block of a few horizontal pixels or a few vertical pixels can be also easily used.

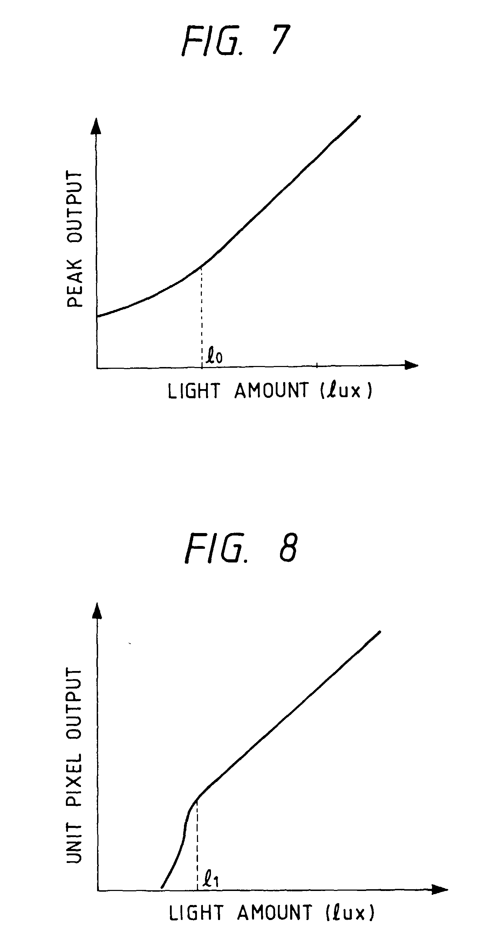

Fig. 7 shows the calculated photoelectric converting characteristic of the peak output of a three-pixel block as described in the embodiment. In this instance, it is assumed that two pixels among the three pixels are always dark and light is shone on the remaining one pixel. The abscissa axis indicates amount of light.

It will be understood from Fig. 7 that although there is a linearity in the case where the amount of reflected light from the target object is equal to or larger than $\ell_0$ [lux], in case of a low luminance which is equal to or less than $\ell_0$, the characteristic is non-linear. In the case where light of $\ell_0$ or more is irradiated, only the transistor 1 of the irradiated pixel performs the reading operation. When the light of $\ell_0$ or less is irradiated, the transistors 1 of the other two pixels in the dark state also perform the reading operations, so that a deviation from the true peak output substantially occurs.

Therefore, a target object of a low luminance that is equal to or less than $\ell_0$ [lux] is sometimes erroneously detected, because, the difference in output (y-direction distance in Fig. 7) is small between the case where there is reflected light and the case where there is no reflected light.

In this case, it is sufficient to use the characteristic shown in Fig. 8 of a sensor using a bipolar type NPN transistor. That is, each pixel is more deeply reset, (for example, the transient resetting time is set to a long time) and the amount of forward bias between base and emitter at the end of the resetting is further reduced. By this method, in the reading operation, insufficient forward bias is not applied between base and emitter to turn on the transistors 1 in the dark area. Operating conditions are chosen so that the photoelectric converting characteristic positively becomes non-linear at a light amount level of $\ell_1$ [lux] or less as shown in Fig. 8.

In the embodiment, therefore, when the resetting is deeply executed and $\ell_0$ and $\ell_1$ in Figs. 7 and 8 are set so that $\ell_0 \cong \ell_1$, the peak luminance signal can be substantially detected at a higher precision. When the luminance of reflected light from the target object to be detected has previously been known, the detecting precision can be improved by resetting so that such a luminance is equal to $\ell_1$.

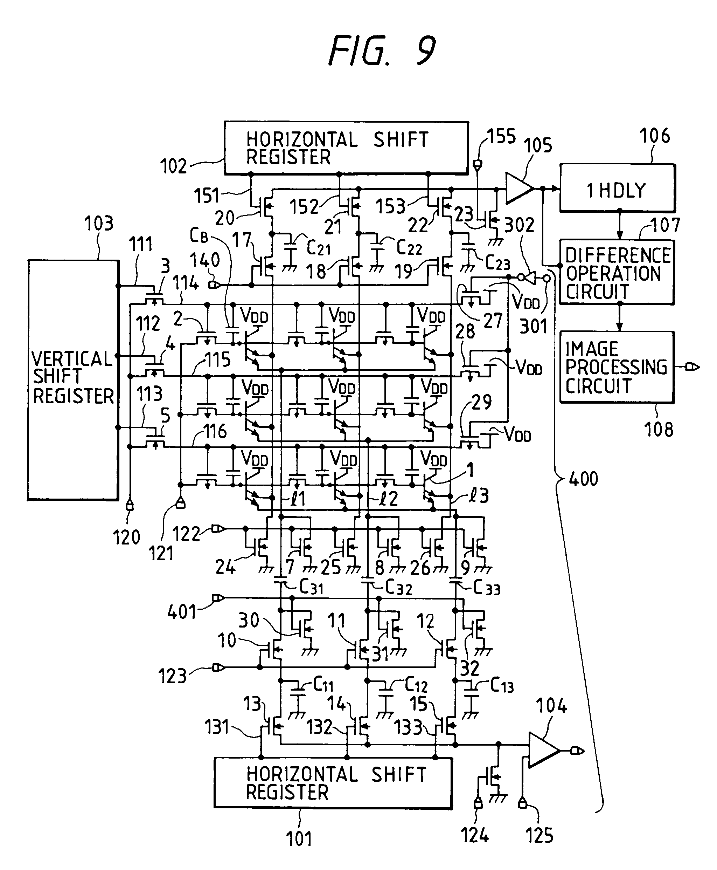

Fig. 9 shows the fourth embodiment of the invention. The embodiment is constructed by adding a clamping circuit comprising capacitors $C_{31}$ to $C_{33}$, MOS transistors 30, 31, and 32, and a terminal 401 to the third embodiment in Fig. 5.

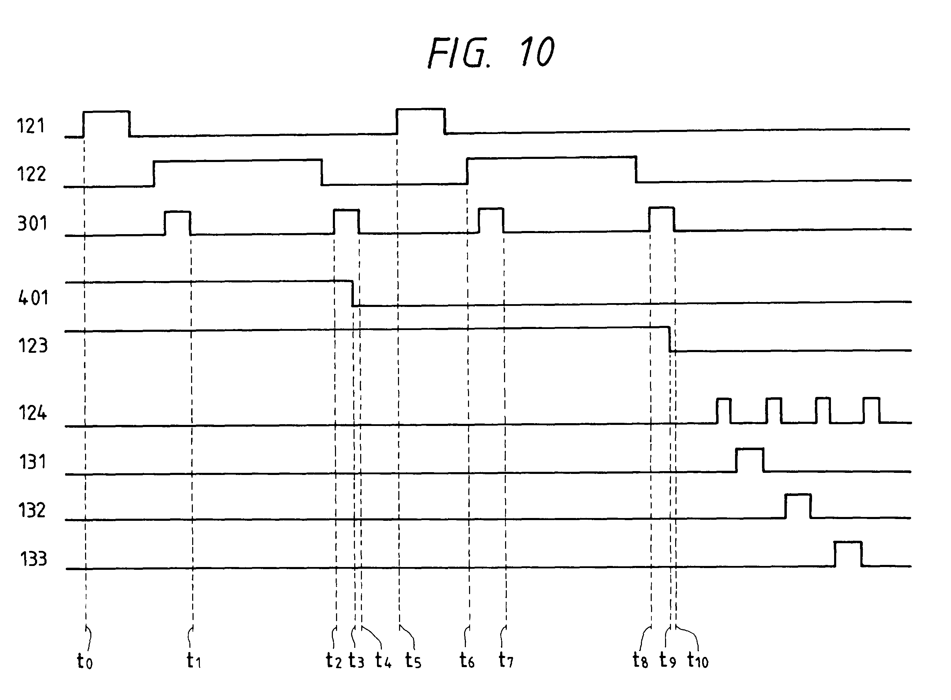

The operation of the embodiment will now be described hereinbelow with reference to Fig. 10. First, the clamping reset and transient reset are performed at time from to to $t_1$ and a predetermined accumulating operation is executed. After that, the reading operation of signals is started at time $t_2$ and the charges are accumulated on the upper side (in the diagram) of the capacitors $C_{31}$ to $C_{33}$. Till this time, the pulse of the H level is supplied to each of the terminals 401 and 123 and the storage capacitors $C_{11}$ to $C_{13}$ are in the reset state.

Subsequently, at time $t_3$ just before the end of the reading operation, the pulse of the terminal 401 is trailed and the capacitors $C_{11}$ to $C_{13}$ are set to the floating state. After that, the reading operation is finished at time $t_4$. At this time, the clamping reset and transient reset are again performed with respect to the signal voltages which were read out to vertical output lines $\ell_1$ to $\ell_3$ for a period of time from $t_5$ to $t_7$.

When the pulse is supplied to the terminal 122 at time $t_6$, the vertical output lines $\ell_1$, $\ell_2$, and $\ell_3$ are respectively reset from the levels of V1 to V3 to ground level. Therefore, potentials of the capacitors $C_{11}$ to $C_{13}$ are also set to $-\alpha V_1$, $-\alpha V_2$, and $-\alpha V_3$. "$\alpha$" in this case denotes a coefficient comprising the clamping capacitors $C_{31}$ to $C_{33}$, temporary storage capacitors $C_{11}$ to $C_{13}$, and a parasitic capacitor.

After time $t_7$, the transistor 1 of each pixel restarts the accumulating operation. For such a period of time, however, when the light of light emitting means such as an LED or the like is shone at a target object detecting area, so long as the target object exists in such an area, reflected light is photoelectrically converted. After that, when a predetermined accumulating time is finished, the operation to read out the signals from the pixels is executed at time $t_8$. At time $t_9$ just before the end of the reading operation, the pulse of the L level is supplied to the terminal 123 and the storage capacitors $C_{11}$ and $C_{13}$ are disconnected from the clamping circuit.

Now assuming that the signal reading voltages of the pixels at this time are set to V1' to V3', the voltages held in the capacitors $C_{11}$ to $C_{13}$ are equal to $\alpha(V1' - V1)$, $\alpha(V2' - V2)$, and $\alpha(V3' - V3)$, respectively. After that, in a manner similar to the first embodiment, the voltages held in the capacitors $C_{11}$ to $C_{13}$ are read out in turn and the operation to detect the presence or absence of reflected light is executed.

When reflected light is detected, the mode is changed to the second mode and the reading operations from the capacitors $C_{21}$ to $C_{23}$ are performed, thereby executing the detailed signal processes in the image processing circuit 108.

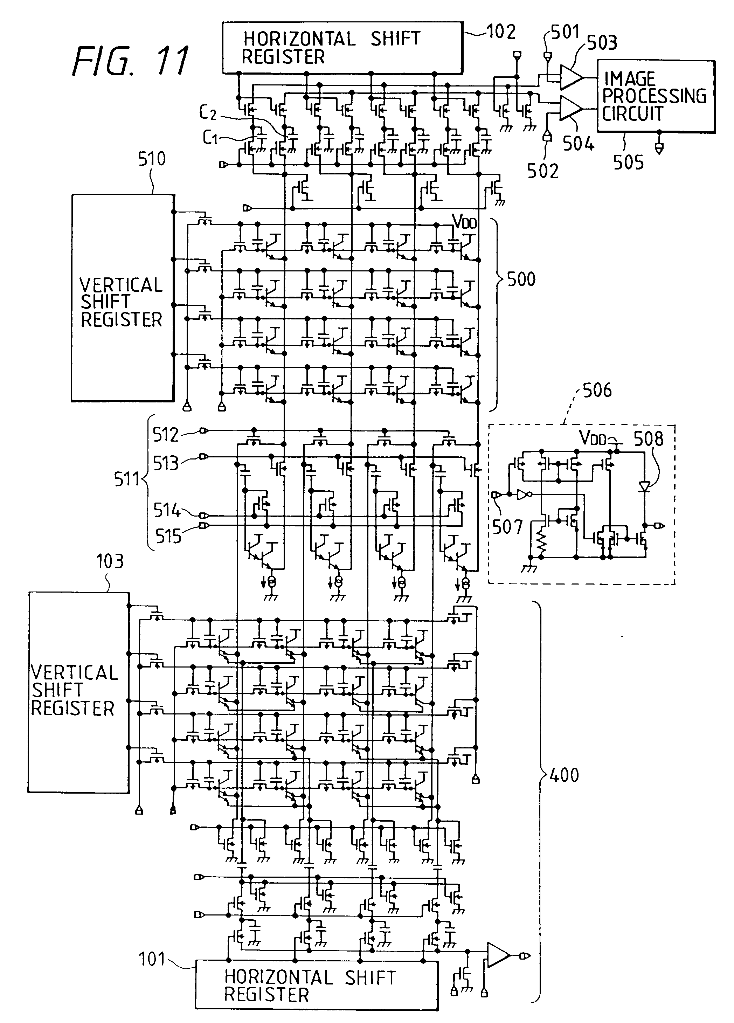

Fig. 11 shows the fifth embodiment of the invention.

A circuit portion shown at reference numeral 400 in the embodiment is substantially the same as the circuit portion 400 in Fig. 9. With respect to the operation, the operation portion in the first mode at a low voltage is also substantially the same as that of the fourth embodiment. However, as an operation portion in the second mode at the second power source voltage, a memory 500 using an NPN transistor as a memory device is used. The memory 500 is constructed by arranging the above memory elements in the row and column directions and is driven by a vertical shift register 510. Signals stored in the foregoing circuit portion 400 are transferred to the memory 500 by a transfer circuit unit 511. The transfer circuit unit 511 has terminals 512 to 515 and is constructed as shown in the diagram. By supplying control pulses to the terminals 512 to 515 at predetermined timings, a signal of each pixel of the row selected by the vertical shift register 103 can be transferred to each pixel of the row in the memory 500 selected by the vertical shift register 510. The signals read out from the memory 500 are held in the pairs of temporary storage capacitors $C_1$ and $C_2$ and are serially read out, respectively. The read-out signal voltages are compared with the reference voltages supplied from terminals 501 and 502 by comparators 503 and 504. The comparison results are signal processed by an image processing circuit 505.

In the embodiment, the case where the signals read out from the memory 500 are simultaneously compared with the different reference voltages has been shown. It is also possible to construct such that a differential arithmetic operation is executed between the adjacent pixels by using a differential amplifier, and an edge component in the horizontal or vertical direction is extracted. On the basis of such an edge component, an advanced filtering process or the like can be performed in the image processing circuit 505.

In the embodiment, a constant current circuit 506 serving as a driving circuit surrounded by a broken line is also provided. In such a circuit, a pulse timing at which a pulse is input to a control terminal 507 and a sequence comprising a resetting process, a reading process, and the like of the photoelectric converting apparatus can be easily synchronized. Light emitting means 508 such as an LED or the like is allowed to emit the light synchronously with the foregoing pulse timing, thereby enabling the target object to be illuminated.

The constant current circuit 506 in Fig. 11, the power source voltage detecting circuit 201 of Fig. 4 and power source switching circuit in Fig. 3 can be used in the first to fifth embodiments, respectively.

As mentioned above, according to the first embodiment of the invention, by providing the first circuit unit which operates at the low power source voltage and the second circuit unit which operates at the high power source voltage, there is an effect such that the apparatus is efficiently made operative and the electric power consumption can be reduced.

According to another embodiment, only the presence of reflected light from the target object is detected by making the first circuit unit operative at the low power source voltage and the image of the target object is detected in detail by making the second circuit unit operative at the high power source voltage on the basis of such a detection, so that the electric power consumption can be reduced and the target object can be detected at a high precision.

By detecting the maximum luminance in the detecting area, detection can be executed at a higher speed.

By performing detection using as a reference the level detected from ambient light (i.e. light other than that from a light source for illuminating the target object), a target object of a low luminance can be detected at a high precision.

By providing the power source voltage detecting circuit, an erroneous detection in the case where the power source voltage is temporarily fluctuated can be prevented.

By providing the circuit which for driving the illumination light source in synchronisation with the photoelectric conversion operation sequence, the electric power consumption can be further reduced.

The present invention may be used, for example, in a camera. In one embodiment, the photoelectric conversion device is arranged to detect the presence of an operator's eye at an eyepiece of the camera, while operating at the lower supply voltage, and the system switches to the higher supply voltage in response to detecting the operator's eye. In this way a camera may be powered, for example by a 6 volt dry cell. Initially a power supply voltage of 3.3 volts is used to drive some of the camera circuits, permitting a reduced power consumption. Then in response to detecting the operator's eye, a power supply of 5 volts is provided.

The embodiments discussed above are presented only by way of example, and the present invention is not limited thereto. Those skilled in the art will be aware that many other arrangements are possible within the scope of the invention. For example, many other types of photodetector may be used instead of the illustrated bipolar phototransistors.

## Claims

1. A photodetection method, using photodetector apparatus comprising a first circuit unit (10 to 16, 101, 104) and a second circuit unit (17 to 23, 102, 105 to 108), the first and second circuit units having in common at least a photodetector unit comprising at least one photodetector cell (1),
   characterised in that the method comprises

   a first step of operating the first circuit unit at a first power source voltage to detect the presence of light from an external object by reading signals from the photodetector unit,
   and a second step of operating the second circuit unit at a second power source voltage in response to the detection of said presence of light in the first step, to detect an image of the object, or a feature of the image which was not detected in the first step, by reading signals from the photodetector unit, the second power source voltage being higher than the first power source voltage.

2. A method according to claim 1, wherein the first step comprises detecting the maximum of the luminances detected by a plurality of photodetector cells in a desired detection area of the photodetector unit.

3. A method according to claim 1 or claim 2, wherein the apparatus comprises a light source for illuminating external objects in an object detecting area, and the first step comprises using a reference signal level obtained from a signal generated by the photodetector unit in response to light originating other than from the said light source.

4. A method according to any one of claims 1 to 3, wherein the first step comprises comparing a signal obtained from the photodetector unit with a threshold level.

5. Photodetection apparatus comprising a first circuit unit (10 to 16, 101, 104) and a second circuit unit (17 to 23, 102, 105 to 108), the first and second circuit units having in common at least a photodetector unit comprising at least one photodetector cell (1)
   characterised in that

   the first circuit unit is arranged to operate at a first power source voltage to detect the presence of light from an external object by reading signals from the photodetector unit,
   and the second circuit unit is arranged to operate at a second power source voltage, in response to the detection of said presence of light from an external object, to detect an image of the external object or to detect a feature of the image which feature was not detected by the first circuit unit, by reading signals from the photodetection unit, the second power source voltage being higher than the first power source voltage.

6. Apparatus according to claim 5, further comprising a power source voltage detecting circuit ($R_0$ to $R_2$, 202, 203:Fig 4) for detecting whether a power source voltage falls below a pre-set level.

7. Apparatus according to claim 6, comprising means (204) for gating the detection of said presence of light by the first circuit unit with the output from the power source voltage detecting circuit.

8. Apparatus according to any one of claims 5 to 7, further comprising a light source (508) for illuminating the external object, means for specifying a photoelectric conversion period for the photodetector unit, and a drive circuit (506) for driving the light source synchronously with the photoelectric conversion period.

9. Photodetection apparatus comprising:

a photodetector portion comprising at least one photodetector cell (1);
a first read-out portion (10 to 15, 101) for reading out a signal from the photodetector portion; and
a second read-out portion (17 to 22, 102) for reading out a signal from the photodetector portion,

characterised in that

the second read-out portion operates at a higher power source voltage than the first read-out portion and the first read-out portion comprises means for actuating operation of the second read-out portion in response to the signal from the photodetector portion.

**Patentansprüche**

1. Photodetektionsverfahren unter Verwendung eines Photodetektorgerätes mit einer ersten Schaltungseinheit (10 bis 16, 101, 104) und einer zweiten Schaltungseinheit (17 bis 23, 102, 105 bis 108), wobei die erste und zweite Schaltungseinheit über wenigstens eine Photodetektoreinheit mit wenigstens einer Photodetektorzelle (1) gemeinsam verwendet,
   **gekennzeichnet durch**

einen ersten Verfahrensschritt des Betreibens der ersten Schaltungseinheit mit einer ersten Speisequellenspannung zur Feststellung der Anwesenheit von Licht aus einem externen Gegenstand durch Lesen von Signalen aus der Photodetektoreinheit,
und durch einen zweiten Verfahrensschritt des Betreibens der zweiten Schaltungseinheit mit einer zweiten Speisequellenspannung als Reaktion auf die Feststellung der Anwesenheit von Licht im ersten Verfahrensschritt zur Feststellung eines Bildes des Gegenstands oder eines im ersten Verfahrensschritt nicht festgestellten Merkmals des Bildes durch Lesen von Signalen aus der Photodetektoreinheit, wobei die zweite Speisequellenspannung höher als die erste Speisequellenspannung ist.

2. Verfahren nach Anspruch 1, bei dem der erste Verfahrensschritt das Feststellen des Maximums der von einer Vielzahl von Photodetektorzellen in einem gewünschten Feststellbereich der Photodetektoreinheit festgestellten Leuchtdichte umfaßt.

3. Verfahren nach Anspruch 1 oder 2, bei dem das Gerät über eine Lichtquelle zur Beleuchtung externer Gegenstände in einem Gegenstandsfeststellbereich enthält, und wobei der erste Verfahrensschritt das Verwenden eines aus einem Signal gewonnenen Bezugsignalpegels umfaßt, das die Photodetektoreinheit als Reaktion auf aus einer anderen als der Lichtquelle stammenden Licht erzeugt.

4. Verfahren nach einem der Ansprüche 1 bis 3, bei dem der erste Verfahrensschritt das Vergleichen eines aus der Photodetektoreinheit gewonnenen Signals mit einem Schwellwertpegel umfaßt.

5. Photodetektionsgerät, mit einer ersten Schaltungseinheit (10 bis 16, 101, 104) und einer zweiten Schaltungseinheit (17 bis 23, 102, 105 bis 108), wobei die erste und zweite Schaltungseinheit wenigstens eine Photodetektoreinheit mit wenigstens einer Photodetektorzelle (1) gemeinsam verwendet,
   **dadurch gekennzeichnet, daß**

die erste Schaltungseinheit eingerichtet ist, mit einer ersten Speisequellenspannung zu arbeiten, um die Anwesenheit von Licht aus einem externen Gegenstand durch Lesen von Signalen aus der Photodetektoreinheit festzustellen, und daß die zweite Schaltungseinheit eingerichtet ist, mit einer zweiten Speisequellenspannung als Reaktion auf die Feststellung der Anwesenheit von Licht aus einem externen Gegenstand betrieben zu werden, um ein Bild des externen Gegenstands oder eines von der ersten Schaltungseinheit nicht festgestellten Merkmals des Bildes durch Lesen von Signalen aus der Photodetektionseinheit festzustellen, wobei die zweite Speisequellenspannung höher als die erste Speisequellenspannung ist.

6. Gerät nach Anspruch 5, das des weiteren eine Speisequellen-Spannungsfeststellschaltung (R$_0$ bis R$_2$, 202, 203:Fig 4) enthält, um festzustellen, ob eine Speisequellenspannung unter einen voreingestellten Pegel sinkt.

7. Gerät nach Anspruch 6, mit Mitteln (204) zum Verknüpfen der Feststellung der Anwesenheit von Licht von der ersten Schaltungseinheit mit dem Ausgangssignal aus der Speisequellen-Spannungsfeststellschaltung.

8. Gerät nach einem der Ansprüche 5 bis 7, das des weiteren ausgestattet ist mit einer Lichtquelle (508) zur Beleuchtung des externen Gegenstands, mit Mitteln zum Spezifizieren einer photoelektrischen Wandlerperiode für die Photodetektoreinheit und mit einer Ansteuerschaltung (506) zum Ansteuern der Lichtquelle synchron mit der photoelektrischen Wandlerperiode.

9. Photodetektionsgerät, mit:

einem Photodetektorabschnitt mit wenigstens einer Photodetektorzelle (1);
einem ersten Ausleseabschnitt (10 bis 15, 101) zum Auslesen eines Signals aus dem Photodetektorabschnitt; und mit
einem zweiten Ausleseabschnitt (17 bis 22, 102) zum Auslesen eines Signals aus dem Photodetektorabschnitt,

**dadurch gekennzeichnet,** daß

der zweite Ausleseabschnitt mit einer höheren Speisequellenspannung arbeitet als der erste Ausleseabschnitt und daß der erste Ausleseabschnitt Mittel zum Steuern der Arbeitsweise des zweiten Ausleseabschnitts als Reaktion auf das Signal aus dem Photodetektorabschnitt enthält.

**Revendications**

1. Procédé de photodétection, utilisant un dispositif photodétecteur comprenant un premier module (10 à 16, 101, 104) de circuit et un second module (17 à 23, 102, 105 à 108) de circuit, les premier et second modules de circuit ayant, en commun, au moins un module photodétecteur comprenant au moins une cellule photodétectrice (1),
caractérisé en ce que le procédé comprend

une première étape de fonctionnement du premier module de circuit, à une première tension de source d'alimentation, pour détecter la présence de lumière provenant d'un objet externe en lisant des signaux provenant du module photodétecteur,
et une seconde étape de fonctionnement du second module de circuit, à une seconde tension de source d'alimentation, en réponse à la détection de ladite présence de lumière de la première étape, pour détecter une image de l'objet, ou un détail de l'image, que l'on n'a pas détecté à la première étape, en lisant des signaux provenant du module photodétecteur, la seconde tension de source d'alimentation étant plus haute que la première tension de source d'alimentation.

2. Procédé selon la revendication 1, dans lequel la première étape comprend la détection de la luminance maximale détectée par une pluralité de cellules photodétectrices dans une zone de détection souhaitée du module photodétecteur.

3. Procédé selon la revendication 1 ou la revendication 2, dans lequel le dispositif comprend une source de lumière destinée à éclairer des objets externes situés dans une zone de détection d'objet, et dans lequel la première étape comprend l'utilisation d'un niveau de signal de référence obtenu à partir d'un signal généré par le module photodétecteur en réponse à de la lumière ayant une origine autre que celle de ladite source de lumière.

4. Procédé selon l'une quelconque des revendications 1 à 3, dans lequel la première étape comprend la comparaison d'un signal obtenu par le module photodétecteur avec un niveau de seuil.

5. Dispositif de photodétection comprenant un premier module (10 à 16, 101, 104) de circuit et un second module (17 à 23, 102, 105 à 108) de circuit, les premier et second modules de circuit ayant, en commun, au moins un module photodétecteur comprenant au moins une cellule photodétectrice (1),
caractérisé en ce que

le premier module de circuit est agencé pour fonctionner à une première tension de source d'alimentation pour détecter la présence de lumière d'un objet externe en lisant des signaux provenant du module photodétecteur,
et en ce que le second module de circuit est agencé pour fonctionner à une seconde tension de source d'alimentation, en réponse à la détection de ladite présence de lumière provenant d'un objet externe, pour détecter une image de l'objet externe, ou pour détecter un détail de l'image, lequel détail n'a pas été détecté par le premier module de circuit, en lisant des signaux provenant du module de photodétection, la seconde tension de source d'alimentation étant plus haute que la première tension de source d'alimentation.

6. Dispositif selon la revendication 5, comprenant en outre un circuit ($R_0$ à $R_2$, 202, 203 : figure 4) de détection de tension de source d'alimentation destiné à détecter si une tension de source d'alimentation chute au-dessous d'un niveau prédéterminé.

7. Dispositif selon la revendication 6, comprenant un moyen (204) destiné à déclencher la détection de ladite présence de lumière par le premier module de circuit par la sortie du circuit de détection de tension de source d'alimentation.

8. Dispositif selon l'une quelconque des revendications 5 à 7, comprenant en outre une source (508) de lumière destinée à éclairer l'objet externe, un moyen destiné à préciser une période de conversion photoélectrique du module photodétecteur, et un circuit d'attaque (506) destiné à attaquer la source de lumière de façon synchrone avec la période de conversion photoélectrique.

9. Dispositif de photodétection comprenant :

   une partie photodétectrice comprenant au moins une cellule photodétectrice (1) ;
   une première partie (10 à 15, 101) d'extraction destinée à extraire un signal de la partie photodétectrice ; et
   une seconde partie (17 à 22, 102) d'extraction destinée à extraire un signal de la partie photodétectrice,

   caractérisé en ce que

   la seconde partie d'extraction fonctionne à une tension de source d'alimentation plus haute que la première partie d'extraction et en ce que la première partie d'extraction comprend un moyen destiné à commander le fonctionnement de la seconde partie d'extraction en réponse au signal provenant de la partie photodétectrice.

FIG. 1

FIG. 2

$V_{BB}$
121
122
111
112
113
120
123 (140)
124 (155)
131 (151)
132 (152)
133 (153)

$t_0$ $t_1$ $t_2$ $t_3$ $t_4$ $t_5$ $t_6$ $t_7$ $t_8$ $t_9$ $t_{10}$ $t_{11}$ $t_{12}$

# FIG. 3

# FIG. 4

FIG. 5

# FIG. 6

EP 0 702 484 B1

# FIG. 7

# FIG. 8

EP 0 702 484 B1

# FIG. 9

FIG. 10

## FIG. 11